# EUROPÄISCHE PATENTSCHRIFT

(11) **EP 2 470 838 B1**
(45) Veröffentlichungstag und Bekanntmachung des Hinweises auf die Patenterteilung: **09.10.2019**
(21) Anmeldenummer: 10747452.0
(22) Anmeldetag: 24.08.2010
(51) Int. Cl.: F24S 23/74, F24S 30/40

(54) **PARABOLRINNENKOLLEKTOR**
PARABOLIC TROUGH COLLECTOR
CAPTEUR CYLINDRO-PARABOLIQUE

(30) Priorität: 28.08.2009 DE 102009039021; 29.01.2010 DE 202010001474 U; 26.02.2010 US 713536
(43) Veröffentlichungstag der Anmeldung: 04.07.2012
(73) Patentinhaber: TSK Flagsol Engineering GmbH, 50678 Köln (DE)
(72) Erfinder: KÖTTER, Jens, 41564 Kaarst (DE); WEINREBE, Gerhard, 70771 Leinfelden-Echterdingen (DE); SCHWEITZER, Axel, 71083 Herrenberg (DE); WIDMAYER, Mathias, 72581 Dettingen/Erms (DE); SCHIEL, Wolfgang, 70563 Stuttgart (DE)
(74) Vertreter: Viering, Jentschura & Partner mbB Patent- und Rechtsanwälte
(86) Internationale Anmeldenummer: PCT/EP2010/062343
(87) Internationale Veröffentlichungsnummer: WO 2011/023699

(56) Entgegenhaltungen:
- EP-A1- 1 947 403
- WO-A1-02/103256
- US-A- 2 182 222
- US-A- 4 178 913
- US-A- 4 484 568

## Beschreibung

Die Erfindung richtet sich auf einen Parabolrinnenkollektor umfassend eine Parabolspiegeltragstruktur mit darauf aufgebrachter Parabolspiegelfläche und eine ein Absorberrohr tragende Absorbertragstruktur, wobei beide Tragstrukturen in ortsfester Relativlage zueinander an einem Torsionsrohr, welches unterhalb der Parabolspiegelfläche angeordnet ist, mechanisch befestigt und mit diesem gemeinsam um eine Parabolrinnenkollektor-Rotationslängsachse rotierbar gelagert sind.

Zur Nutzbarmachung von Solarenergie finden solarthermische Kraftwerke Verwendung, bei welchen in Form von mehreren in Reihe und/oder parallel geschalteten, verspiegelten Parabolrinnen die Sonnenstrahlung eingefangen und auf eine Absorberleitung reflektiert werden. In der Absorberleitung wird ein Wärmeträgermedium transportiert, das die aufgrund der Einstrahlung gewonnene Wärmeenergie aufnimmt und zur Erzeugung von Dampf in dem Solarkraftwerk weitertransportiert. Die verspiegelten Parabolrinnen weisen eine Tragstruktur auf, auf welcher die verspiegelten Elemente angeordnet und dem Sonnenlauf nachgeführt werden. Die Spiegelelemente und damit auch die Parabolrinnen weisen eine Apertur (Entfernung der äußeren Spiegelkanten) von ca. 6 m auf. Ein Parabolrinnenkollektor umfasst gegebenenfalls mehrere Elemente, die jeweils starr auf der verwindungssteifen Parabolspiegeltragstruktur angeordnet sind. Ein Element befindet sich dabei dann zwischen zwei beabstandeten Stützpylonen oder Stützpfosten, von welchen es getragen wird. Die einzelnen Elemente sind identisch aufgebaut und zwischen zwei in Reihe hintereinander geschalteten Elementen befindet sich in der Mitte zwischen zwei Stützpylonen oder Stützpfosten eine Antriebseinheit, mit welcher die beiden Elemente oder alle einen Parabolrinnenkollektor ausbildenden Elemente gleichzeitig und gleichmäßig einachsig der Sonne nachgefahren werden können. Die Bewegung wird hierbei üblicherweise mithilfe von Hydraulikzylindern bewirkt, die über Hebel, die mit der Parabolspiegeltragstruktur verbunden sind, die gitterrahmenförmige Parabolspiegeltragstruktur um eine Rotationsachse drehen. Hierbei ist die Konstruktion bei aus der Praxis bekannten Anlagen derart, dass die Rotationsachse oberhalb der Spiegelfläche oder zumindest im Ursprungspunkt oder Scheitelpunkt der parabolförmigen Spiegelkurve verläuft. Dies führt dazu, dass in dem Bereich, in welchem die das Verschwenken der Elemente des Parabolrinnenkollektor bewirkende Antriebseinheit ausgebildet ist, die Spiegelfläche in Längsrichtung des Parabolrinnenkollektors unterbrochen ist, so dass nicht die gesamte Länge eines Parabolrinnenkollektors als Spiegelfläche für eine Ausnutzung des Sonnenlichtes ausgebildet werden kann. Außerdem ist es bei dieser Konstruktion notwendig, an den endseitigen Dreh- und Rotationspunkten eines Kollektorelementes massive Knotenbleche vorzusehen, um die hier auftretenden Rotations- und Torsionskräfte aufnehmen und übertragen zu können.

Wie beispielsweise aus der gattungsgemäßen WO 2005/066553 A1 bekannt ist, bestehen darüber hinaus auch Konstruktionen, bei welchen die Parabolspiegeltragstruktur anstelle eines Drehmomentgitterrahmens ein Torsionsrohr aufweist, welches die Parabolspiegelträgstruktur trägt. Aber auch in diesem Falle ist die Antriebseinheit zwischen zwei Parabolrinnenkollektorelementen angeordnet und bewirkt eine Unterbrechung der Parabolspiegelfläche des Parabolrinnenkollektors. Die mit dem Betätigungselement zur Bewegung der Parabolspiegeltragstruktur zusammenwirkende Parabolrinnenkollektor-Rotationslängsachse einer dortigen primären Scheibe ist in radialer Richtung der primären Scheibe von der Mittellängsachse des die Parabolspiegeltragstruktur abstützenden Torsionsrohres beabstandet angeordnet.

Aus der Praxis sind weiterhin Torsionsrohre mit am Außenumfang angeschweißten Laschen bekannt, an welchen Tragrahmenstrukturen angebracht werden, auf welchen die Spiegelflächen befestigt sind. Bei derartigen Torsionsrohren müssen dann an der Mantelaußenfläche die Absorbertragstruktur ausbildende und das Absorberrohr abstützende Tragelemente angebracht werden, was insbesondere durch Schweißung geschieht. Derartige Tragelemente sind ca. zwei Meter lang und übertragen bei einer Rotations- oder Schwenkbewegung des Parabolrinnenkollektors in eine gekippte Stellung ein erhebliches Drehmoment und damit eine erhebliche Kraft auf die Schweißnähte an der Torsionsrohrmantelaußenfläche mittels welcher diese an dem Torsionsrohr befestigt sind. Auch diese Torsionsrohre sind üblicherweise zwischen zwei Stützpylonen oder Stützpfosten gelagert, so dass diese eine höhere Durchbiegung als eine Gitterrahmentragstruktur aufweisen, die sich über mehrere Stützpylone oder Stützpfosten erstreckt.

Der wesentliche Nachteil des Aufbaus von bekannten Parabolspiegeltragstrukturen zur Ausbildung eines Parabolrinnenkollektors besteht daher darin, dass die Ausbildung einer in Parabolrinnenkollektor-Längsrichtung durchgängigen Spiegelfläche nicht möglich ist, weil dort zwischen einzelnen Elementen oder Parabolrinnenkollektor-Abschnitten Stützpylone oder Antriebspylone ausgebildet sind, die in den Bereich der Spiegelfläche hineinragen, so dass immer Querstreifenbereiche vorhanden sind, in welchen keine Spiegelelemente oder keine verspiegelte Fläche angeordnet sein kann. Außerdem entstehen bei den bekannten Gitterrahmenkonstruktionen relativ hohe Herstellkosten aufgrund der aufwendigen Metallkonstruktion und der Notwendigkeit, Knotenbleche zur Übertragung der Kräfte zur Nachführung der Parabolrinnenkollektoren vorzusehen.

Das Dokument WO2103256A zeigt einen Parabolrinnenkollektor mit den Merkmalen der Präambel des Anspruchs 1.

Der Erfindung liegt daher die Aufgabe zugrunde, eine Lösung zu schaffen, mit welcher sich der konstruktive Aufwand für die Herstellung einer Parabolspiegeltragstruktur verringern und sich die nutzbare Spiegelfläche vergrößern lässt.

Diese Aufgabe wird durch einen Parabolrinnenkollektor gemäß Anspruch 1 gelöst.

Erfindungsgemäß ist demnach die Rotationsachse des Parabolrinnenkollektors zum einen unterhalb der Parabolspiegelfläche angeordnet und zum anderen verläuft die Rotationsachse durch das Zentrum des Torsionsrohres. Hierdurch wird es möglich, allein durch ein Verschwenken des

Torsionsrohres durch daran angreifende Kräfte, die Rotationsbewegung und Schwenkbewegung des Parabolrinnenkollektors zu bewirken. Da das Torsionsrohr unterhalb der Spiegelfläche angeordnet ist und der Parabolrinnenkollektor um die Mittelachse des Torsionsrohres verschwenkt wird, ist es nun möglich, über die gesamte Länge des Torsionsrohres oberhalb desselben eine durchgehende Spiegelfläche auszubilden. Die Lagerung und der vollständige Antrieb des Parabolrinnenkollektors können unterhalb der Parabolspiegelfläche ausgebildet und angeordnet werden. Damit lässt sich die wirksame Spiegelfläche bezogen auf eine gegebene Länge eines Torsionsrohres oder eines

Parabolrinnenkollektors um 5 % gegenüber dem vorbekannten Stand der Technik erhöhen. Gleichzeitig wird durch die Verwendung des Torsionsrohres eine gegenüber Gitterrahmentragkonstruktionen verbesserte Torsionssteifigkeit erreicht, da die üblicherweise gebildeten Gitterrahmen-Torsionsboxen eine gegenüber einem Rohr schlechtere Torsionssteifigkeit aufweisen.

Die mit der durchlaufenden oder durchgehenden und vergrößerten Spiegelfläche verbundenen Vorteile bestehen neben der höheren Flächennutzung in einer verbesserten Reinigbarkeit der Spiegelfläche und in einer höheren Ausnutzung der Länge des Wärmeträgerrohres.

Um ein Torsionsrohr mit einem zumindest annähernd gleichen Durchbiegeverhalten wie eine Gitterrahmenstruktur auszustatten, zeichnet sich die Erfindung dadurch aus, dass das Torsionsrohr als Durchlaufträger ausgebildet ist. Unter Durchlaufträger wird hierbei der aus der Mechanik bekannte über mehr als zwei Abstützungen reichende Mehrfeld-Träger eines Balkentragwerkes verstanden, wie er aus der Baustatik bekannt ist. Ein durchlaufendes oder als Durchlaufträger ausgebildetes Torsionsrohr zeichnet sich dadurch aus, dass es über seine Länge auf mehreren, beabstandet zueinander angeordneten Stützpylonen oder Stützpfosten aufliegt und/oder auf diesen abgestützt ist. Hierdurch ist es möglich, praktisch beliebig lange Parabolrinnenkollektoren und diese tragende Torsionsrohre auszubilden, wobei deren Durchbiegung durch die beabstandete Positionierung der Stützpylone oder Stützpfosten an geeigneten und berechneten Stellen auf das gewünschte oder tolerierte Maß reduziert werden kann.

Hierdurch ist es möglich, nicht nur durchgängige Spiegelflächen, sondern auch längere Parabolrinnenkollektoren und/oder Parabolrinnenkollektor-Elemente, aus denen die jeweiligen Parabolrinnenkollektoren aufgebaut sind, auszubilden. Ebenso wird durch diese Maßnahme der gegenüber Tragrahmengitterkonstruktionen zunächst vorhandene Nachteil eines Rohres hinsichtlich seiner größeren Durchbiegung aufgehoben und kompensiert.

Die Vorteile des durchlaufenden oder durchgängigen Torsionsrohres bestehen in dessen hoher Torsionssteifigkeit und dessen hoher Biegesteifigkeit, da keine durch eine Unterbrechung im Bereich eines Pylons oder Stützpfostens bewirkte Unterbrechung vorliegt.

Aufgrund der durch die mechanische Ausgestaltung des Parabolrinnenkollektors sich ergebenden Möglichkeiten zeichnet sich der Parabolrinnenkollektor erfindungsgemäß weiterhin dadurch aus, dass er eine in Längsrichtung des Torsionsrohres durchgehend und im Wesentlichen unterbrechungsfrei ausgebildete Parabolspiegelfläche aufweist.

Hierbei ist es dann gemäß Ausgestaltung der Erfindung für die Ausbildung der Parabolspiegelfläche zweckmäßig, wenn die Parabolspiegelfläche aus jeweils Reihen von abstandsfrei aneinander liegende Parabolspiegelelemente aufweisenden Spiegelflächen gebildet ist.

Von Vorteil ist es hierbei weiterhin, dass sich die durchgehende Parabolspiegelfläche im Wesentlichen über die Länge des Durchlaufträgers erstreckt, was die Erfindung ebenfalls vorsieht.

Eine besonders günstig zu realisierende Abstützung und Lagerung des Torsionsrohres ist gemäß Weiterbildung der Erfindung dadurch zu erreichen, dass das Torsionsrohr in auf Stützpylonen oder Stützpfosten angeordneten Gleit- oder Rollenlagern abgestützt und/oder gelagert ist. Mit diesem neuen Lagerungskonzept lässt sich das Torsionsrohr auf einfache Art und Weise als Kraftübertragungselement zum Verschwenken des Parabolrinnenkollektors verwenden. Da das Torsionsrohr unterhalb der Spiegelfläche angeordnet ist, ist es ohne Weiteres auf üblichen Gleitlagern oder Rollenlagern abgestützt zu lagern, die eine Drehbewegung des Torsionsrohres erlauben.

Um zu erreichen, dass die Schwerelinie des Torsionsrohres und/oder des Parabolrinnenkollektors jeweils in der Rotationsachse des Torsionsrohres liegt, sieht die Erfindung weiterhin vor, dass auf der der Parabolspiegelfläche abgewandten Seite des Torsionsrohres Gegengewichte derart angeordnet sind, dass die Schwerelinie des Parabolrinnenkollektors und/oder des Torsionsrohres zumindest im Wesentlichen mit der Parabolrinnenkollektor-Rotationslängsachse zusammenfällt.

Gemäß weiterer Ausgestaltung der Erfindung lässt sich dies insbesondere dadurch erreichen, dass die Gegengewichte benachbart zu das Torsionsrohr tragenden Stützpylonen oder Stützpfosten angeordnet sind. Bei einem zweiseitig eingespannten Balken verläuft die Biegelinie in der Nähe der Lager bekannterweise durch "0", was bedeutet, dass an dieser Stelle keine Biegemomente im Balken bestehen. An diesen Stellen werden die massiven Gegengewichte insbesondere angebracht.

Dadurch, dass die Parabolrinnenkollektor-Rotationslängsachse und die Mittellängsachse des Torsionsrohres zusammenfallen und darüber hinaus insbesondere auch die Schwereachse oder Schwerelinie und die Drehachse des Parabolrinnenkollektors dann identisch sind, ergibt sich eine Verringerung der Antriebsdrehmomente und eine Verringerung der Verwindung des Torsionsrohres zum längsseitigen Ende des Parabolrinnenkollektors hin.

Schließlich zeichnet sich die Erfindung in weiterer Ausgestaltung auch noch dadurch aus, dass die Absorbertragstruktur das Torsionsrohr diametral durchgreifende Tragelemente umfasst. Dadurch, dass die den Absorber tragende Absorberstruktur, im Ausführungsbeispiel einzelne, das Absorberrohr abstützende Stützpfosten, diametral durch den Querschnitt des Torsionsrohres geführt sind, ist ein solcher Stützpfosten jeweils an zwei beabstandeten und diametral gegenüberliegenden Bereichen der Torsionsrohrmantelfläche mechanisch abgestützt sowie gegebenenfalls an den beiden Stellen auch durch Schweißen befestigt. Hierdurch wird das durch einen solchen Stützpfosten beim Verschwenken des Parabolrinnenkollektors jeweils ausgeübte Drehmoment abgefangen und wird eine Deformation oder ein Verbeulen des Torsionsrohres vermieden. Auf die Verwendung aufwendiger und teurer Knotenbleche kann verzichtet werden.

Die Erfindung ist nachstehend anhand einer Zeichnung beispielhaft näher erläutert. Diese zeigt in
- Fig. 1: in schematischer Perspektivdarstellung eine erfindungsgemäße Parabolspiegeltragstruktur,
- Fig. 2: in schematischer Darstellung einen Parabolrinnenkollektor oder ein Element eines Parabolrinnenkollektors mit Aufsicht auf die Spiegelflächenrückseite und in
- Fig. 3: in schematischer Darstellung eine Aufsicht auf die Spiegelfläche eines Parabolrinnenkollektors oder Parabolrinnenkollektor-Elementes.

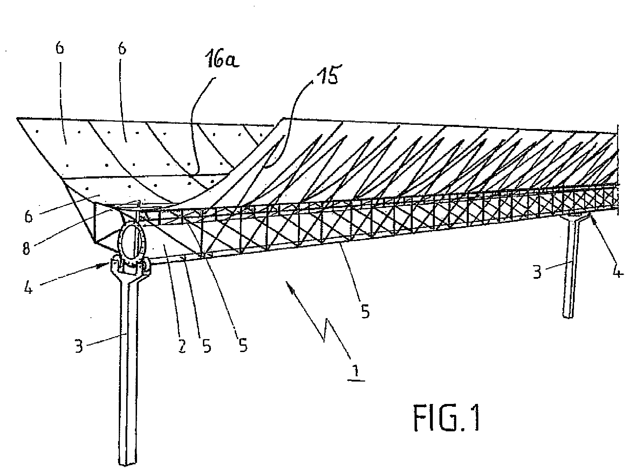

Die Fig. 1 zeigt eine Parabolspiegeltragstruktur 1, die ein auf zwei Stützpylonen 3 gelagertes Torsionsrohr 2 umfasst. Das Torsionsrohr 2 ist dabei in auf den Stützpylonen 3 angeordneten Rollenlagern 4 rotierbar abgestützt. An mantelseitig auf dem Torsionsrohr 2 befestigt ausgebildeten Befestigungslaschen 5 sind an dem Torsionsrohr 2 Tragarme 15 in Form von Gitterrahmenkonstruktionen angeordnet. Auf diesen Tragarmen 15 und damit auf der Parabolspiegeltragstruktur 1 sind in Längsrichtung des Torsionsrohres 2 abstandsfrei und vorzugsweise nahtlos aneinander liegend Parabolspiegelelemente 6 befestigt, so dass sich in Torsionsrohrlängsrichtung jeweils eine durchgehende Spiegelfläche 16a, 16b ergibt. Allein im Scheitel 17 des parabolförmigen Verlaufes aneinander gereihter Parabolspiegelelemente 6 ergibt sich ein durchgehender Längsschlitz 7, durch welchen hindurch sich aus der Mantelfläche des Torsionsrohres 2 hervorstehende Tragelemente 8 der Absorbertragstruktur erstrecken. Im Ausführungsbeispiel ist jede durchgehende Spiegelfläche 16a, 16b jeweils aus zwei abstandsfrei aneinander liegenden Reihen aus jeweils zwölfvierundzwanzig Spiegelelementen 6 gebildet, wobei aber auch andere Kombinationen oder Ausführungsformen möglich sind. Die in den Figuren 1 bis 3 dargestellte Parabolspiegeltragstruktur 1 ist Basis für einen daraus gebildeten Parabolrinnenkollektor 14 oder ein Parabolrinnenkollektor-Element. Die Spiegelflächen 16a und 16b bilden jeweils die Parabolspiegelfläche 16 eines Parabolrinnenkollektors 15 oder eines Parabolrinnenkollektor-Elementes aus.

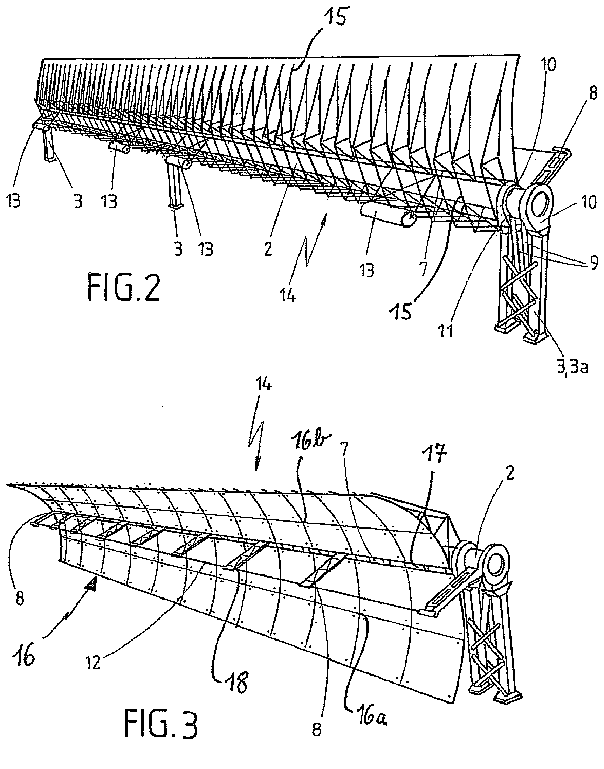

Wie aus der Fig. 2 ersichtlich ist, handelt es sich bei dem Torsionsrohr 2 um ein als Durchlaufträger ausgebildetes Torsionsrohr, das sich auf insbesondere drei Stützpylonen 3 abstützt, wobei der in Fig. 2 rechte Stützpylon 3a gleichzeitig als Antriebspylon oder Antriebspfosten ausgebildet ist. Zum Verschwenken des Torsionsrohres 2 sind an den Stützpfosten des Antriebspylons 3a zwei Hydraulikzylinder 9 ausgebildet, die an Antriebslaschen 10 angreifen und damit ein Rotieren und Verschwenken des Torsionsrohres 2 in den Rollenlagern 4 sowie in dem im Bereich des Antriebspylons 3a ausgebildeten Ringlager 11 ermöglichen. Die Tragelemente 8 durchlaufen und durchgreifen die Querschnittsfläche des Torsionsrohres 2 diametral von oben nach unten und sind an den beiden Berührungsbereichen über die Torsionsrohrmantelfläche an dem Torsionsrohr 2 befestigt.

Das Torsionsrohr 2 ist unterhalb der von den Parabolspiegelelementen 6 ausgebildeten Spiegelflächen 16a, 16b angeordnet und derart gelagert, dass die Parabolrinnenkollektor-Rotationslängsachse mit der Mittelängsachse des Torsionsrohres 2 zusammenfällt.

Gegenüber liegend zu dem Längsschlitz 7 ist an dem, dem Torsionsrohr 2 abgewandten Ende der Tragelemente 8 ein ein Wärmeträgermedium führendes Absorberrohr 12 angeordnet. Sowohl die Parabolspiegeltragstruktur 1 mit den darauf mittels der Parabolspiegelelemente 6 aufgebrachten Parabolspiegelflächen 16a, 16b als auch die das Absorberrohr 12 tragende Tragelemente 8 umfassende Absorbertragstruktur 18 sind derart an dem Torsionsrohr 2 befestigt, dass sie auch bei einem Verschwenken des Parabolrinnenkollektors 14 in ortsfester Relativlage zueinander verbleiben und gemeinsam um die durch die Mitte des Torsionsrohres 2 führende Parabolrinnenkollektor-Rotationslängsachse rotierbar gelagert sind.

Auf der den Parabolspiegelflächen 16a, 16b abgewandten Seite des Torsionsrohres 2 sind an diesem massive Gegengewichte 13 derart angeordnet, dass die Schwerelinie des Parabolrinnenkollektors 14 und/oder des Torsionsrohres 2 zumindest im Wesentlichen mit der Parabolrinnenkollektor-Rotationslängsachse zusammenfällt. Hierbei sind die Gegengewichte 13 benachbart zu den das Torsionsrohr 2 tragenden Stützpylonen 3, 3a oder Stützpfosten angeordnet.

In nicht dargestellter Weise können die Rollenlager 4 auch als Gleitlager ausgebildet sein. Ebenso ist es möglich, ein Schmiermittel zu verwenden, um ein problemloses Verschwenken des Torsionsrohres 2 in dem jeweiligen Lager zu ermöglichen.

Die Steuerung und Nachführung des Parabolrinnenkollektors erfolgt mittels bekannter Sonnensensoren und mittels bekannter und üblicher Regelkreise.

## Patentansprüche

1. Parabolrinnenkollektor (14) umfassend eine Parabolspiegeltragstruktur (1) mit darauf aufgebrachter Parabolspiegelfläche und eine ein Absorberrohr (12) tragende Absorbertragstruktur, wobei beide Tragstrukturen in ortsfester Relativlage zueinander an einem Torsionsrohr (2), welches unterhalb der Parabolspiegelfläche angeordnet ist, mechanisch befestigt und mit diesem gemeinsam um eine Parabolrinnenkollektor-Rotationslängsachse rotierbar gelagert sind, wobei das Torsionsrohr (2) derart angeordnet ist, dass die Parabolrinnenkollektor-Rotationslängsachse mit der Mittellängsachse des Torsionsrohres (2) zusammenfällt, und wobei das Torsionsrohr (2) als Durchlaufträger ausgebildet ist, **dadurch gekennzeichnet, dass** auf der der Parabolspiegelfläche abgewandten Seite des Torsionsrohres (2) Gegengewichte (13) derart angeordnet sind, dass die Schwerelinie des Parabolrinnenkollektors (14) und/oder des Torsionsrohres (2) zumindest im Wesentlichen mit der Parabolrinnenkollektor-Rotationslängsachse zusammenfällt.

2. Parabolrinnenkollektor (14) nach Anspruch 1, **dadurch gekennzeichnet, dass** er eine in Längsrichtung des Torsionsrohres (2) durchgehend und im Wesentlichen unterbrechungsfrei ausgebildete Parabolspiegelfläche (16) aufweist.

3. Parabolrinnenkollektor (14) nach Anspruch 2, **dadurch gekennzeichnet, dass** die Parabolspiegelfläche (16) aus jeweils Reihen von abstandsfrei aneinander liegende Parabolspiegelelemente (6) aufweisenden Spiegelflächen (16a, 16b) gebildet ist.

4. Parabolrinnenkollektor (14) nach Anspruch 2 oder 3, **dadurch gekennzeichnet, dass** sich die durchgehende Parabolspiegelfläche (16) im Wesentlichen über die Länge des Durchlaufträgers erstreckt.

5. Parabolrinnenkollektor (14) nach einem der vorhergehenden Ansprüche, **dadurch gekennzeichnet, dass** das Torsionsrohr (2) in auf Stützpylonen (3, 3a) oder Stützpfosten angeordneten Gleit- oder Rollenlagern (4) abgestützt und/oder gelagert ist.

6. Parabolrinnenkollektor (14) nach Anspruch 1, **dadurch gekennzeichnet, dass** die Gegengewichte (13) benachbart zu den das Torsionsrohr (2) tragenden Stützpylonen (3, 3a) oder Stützpfosten angeordnet sind.

7. Parabolrinnenkollektor (14) nach einem der vorhergehenden Ansprüche, **dadurch gekennzeichnet, dass** die Absorbertragstruktur das Torsionsrohr (2) diametral durchgreifende Tragelemente (8) umfasst.

## Claims

1. A parabolic trough collector (14) comprising a parabolic mirror support structure (1) with a parabolic mirror surface applied thereto, and an absorber support structure supporting an absorber tube (12), the two support structures being mechanically fastened in a fixed position relative to one another on a torsion tube (2) that is arranged below the parabolic mirror surface, and being mounted together with the latter in a fashion capable of rotation about a parabolic trough collector longitudinal rotation axis,
wherein
the torsion tube (2) is arranged in such a way that the parabolic trough collector longitudinal rotation axis coincides with the central longitudinal axis of the torsion tube (2), and wherein the torsion tube (2) is designed as a continuous beam/girder, **characterized in that** counterweights (13) are arranged on the side of the torsion tube (2) averted from the parabolic mirror surface in such a way that the centroidal line/axis of the parabolic trough collector (14) and/or of the torsion tube (2) coincide(s) at least substantially with the parabolic trough collector longitudinal rotation axis.

2. The parabolic trough collector (14) as claimed in claim 1, **characterized in that** it has a parabolic mirror surface (16) designed to be continuous in the longitudinal direction of the torsion tube (2) and to be substantially free from interruption.

3. The parabolic through collector (14) as claimed in claim 2, **characterized in that** the parabolic mirror surface (16) is formed from mirror surfaces (16a, 16b) respectively having rows of parabolic mirror elements (6) lying one against another without spacing.

4. The parabolic trough collector (14) as claimed in claim 2 or 3, **characterized in that** the continuous parabolic mirror surface (16) extends substantially over the length of the continuous beam/girder.

5. The parabolic trough collector (14) as claimed in one of the preceding claims, **characterized in that** the torsion tube (2) is supported and/or mounted in sliding or roller bearings (4) arranged on support pylons (3, 3a) or support posts.

6. The parabolic trough collector (14) as claimed in claim 1, **characterized in that** the counterweights (13) are arranged adjacent to the support pylons (3, 3a) or support posts supporting the torsion tube (2).

7. The parabolic trough collector (14) as claimed in one of the preceding claims, **characterized in that** the absorber support structure comprises support elements (8) passing diametrically through the torsion tube (2).

## Revendications

1. Capteur cylindro-parabolique (14), comprenant une structure porteuse (1) de miroirs paraboliques, sur laquelle est montée une surface de miroirs paraboliques, et une structure porteuse d'absorbeur portant un tube absorbant (12), les deux structures porteuses étant fixées mécaniquement, dans une position relative stationnaire l'une par rapport à l'autre, sur un tube de torsion (2) qui est disposé au-dessous de la surface de miroirs paraboliques, et étant supportées en rotation conjointement avec le tube de torsion autour d'un axe longitudinal de rotation du capteur cylindro-parabolique,
le tube de torsion (2) étant disposé de telle sorte que l'axe longitudinal de rotation du capteur cylindro-parabolique coïncide avec l'axe longitudinal central du tube de torsion (2), de telle sorte que le tube de torsion (2) est constitué en tant que poutre continue,
**caractérisé en ce que**, sur le côté du tube de torsion (2) opposé à la surface de miroirs paraboliques, des contrepoids (13) sont disposés de telle sorte que la ligne des centres de gravité du capteur cylindro-parabolique (14) et/ou du tube de torsion (2) coïncide au moins essentiellement avec l'axe longitudinal de rotation du capteur cylindro-parabolique.

2. Capteur cylindro-parabolique (14) selon la revendication 1, **caractérisé en ce qu'**il comporte une surface de miroirs paraboliques (16) constituée de façon continue dans la direction longitudinale du tube de torsion (2) et essentiellement sans interruption.

3. Capteur cylindro-parabolique (14) selon la revendication 2, **caractérisé en ce que** la surface de miroirs paraboliques (16) est formée de surfaces de miroirs (16a, 16b) comportant respectivement des rangées d'éléments de miroirs paraboliques (6) disposés de façon adjacente et sans espace entre eux.

4. Capteur cylindro-parabolique (14) selon la revendication 2 ou 3, **caractérisé en ce que** la surface de miroirs paraboliques (16) continue s'étend essentiellement sur la longueur de la poutre continue.

5. Capteur cylindro-parabolique (14) selon l'une des revendications précédentes, **caractérisé en ce que** le tube de torsion (2) est appuyé et/ou supporté dans des paliers à glissement ou à rouleaux (4) disposés sur des pylônes d'appui (3, 3a) ou des poteaux d'appui.

6. Capteur cylindro-parabolique (14) selon la revendication 1, **caractérisé en ce que** les contrepoids (13) sont disposés au voisinage des pylônes d'appui (3, 3a) ou des poteaux d'appui portant le tube de torsion (2).

7. Capteur cylindro-parabolique (14) selon l'une des revendications précédentes, **caractérisé en ce que** la structure porteuse d'absorbeur comprend des éléments porteurs (8) traversant diamétralement le tube de torsion (2).
